# DEMANDE DE BREVET EUROPEEN

(11) **EP 2 251 643 A1**
(43) Date de publication de la demande: **17.11.2010**
(21) Numéro de dépôt: 10162721.4
(22) Date de dépôt: 12.05.2010
(51) Int. Cl.: G01C 21/20, H04W 4/02

(54) **Carte à microcircuit pour entité électronique**

(30) Priorité: 13.05.2009 FR 0902324
(71) Demandeur: Oberthur Technologies, 92300 Levallois-Perret (FR)
(72) Inventeur: Stranges, Lorenzo, 92200, NEUILLY SUR SEINE (FR)
(74) Mandataire: Bonnans, Arnaud

(57) **Abrégé**

Une carte à microcircuit (13) destinée à équiper une entité électronique comprend des moyens (131, 132, 133) de détermination de l'orientation de la carte à microcircuit (13) par rapport à une direction définie par un point d'intérêt, et des moyens (133, 135) aptes à commander l'entité électronique de telle sorte qu'elle génère un signal indicatif fonction de ladite orientation.

## Description

L'invention concerne une carte à microcircuit pour entité électronique.

On a proposé, par exemple dans le document US 2005/288 858, de déterminer, au sein d'une entité électronique telle qu'un téléphone portable, la direction d'un point d'intérêt (tel que La Mecque) et d'afficher sur un écran de l'entité électronique une flèche pointant dans cette direction.

Cette solution ne peut toutefois être mise en oeuvre que lorsque l'entité électronique comprend les éléments nécessaires à cet effet (tel qu'un compas dans le document précité).

Dans ce contexte, l'invention propose une carte à microcircuit destinée à équiper une entité électronique **caractérisée en ce qu**'elle comprend des moyens de détermination de l'orientation de la carte à microcircuit par rapport à une direction définie par un point d'intérêt, et des moyens aptes à commander l'entité électronique de telle sorte qu'elle génère (c'est-à-dire par exemple restitue) un signal indicatif (visuel, sonore ou vibratoire par exemple) fonction de ladite orientation.

Ainsi, l'entité électronique peut indiquer le point d'intérêt dès lors qu'on l'équipe de la carte à microcircuit (par exemple par insertion de celle-ci dans un logement prévu à cet effet), sans que l'entité électronique n'intègre elle-même les moyens nécessaires.

Les moyens de détermination peuvent comprendre des moyens d'obtention d'une information de localisation de la carte à microcircuit (donc de l'entité électronique). Il s'agit par exemple d'une information de localisation d'une cellule à travers laquelle l'entité électronique communique dans un réseau de téléphonie mobile, ce qui est particulièrement intéressant lorsque l'entité électronique est un téléphone portable.

En variante, l'information de localisation peut être obtenue au moyen d'un système de type GPS.

On peut prévoir des moyens de consultation d'une table de correspondance (mémorisée par exemple au sein d'un serveur distant accessible par l'entité électronique) associant à l'information de localisation une direction du point d'intérêt par rapport à une direction de référence, ce qui permet de localiser le point d'intérêt dès lors qu'on peut déterminer la direction de référence.

Ceci est par exemple réalisé au moyen d'un magnétomètre qui permet de déterminer la direction du nord magnétique comme direction de référence.

La carte à microcircuit est par exemple une carte d'identification à un réseau de téléphonie mobile.

En pratique, les moyens aptes à commander l'entité électronique peuvent notamment être aptes à émettre une commande (telle qu'une commande de type *"SIM TOOLKIT'*) de génération dudit signal indicatif à destination d'un microprocesseur de l'entité électronique.

On peut prévoir également des moyens aptes à commander l'affichage sur un écran de l'entité électronique d'un message de disposition de l'entité électronique dans une position déterminée adéquate pour la mesure de l'orientation de la carte à microcircuit.

Selon un mode de réalisation envisageable, la carte à microcircuit comprend par exemple une face présentant une indication visuelle (telle qu'une flèche imprimée sur cette face) d'une direction de référence associée aux moyens de détermination. Ceci permet d'aligner la carte à microcircuit (typiquement l'indication visuelle qu'elle présente) avec le point d'intérêt, sans avoir à tenir compte de l'orientation relative de la carte à microcircuit et de l'entité électronique.

Selon une autre possibilité de réalisation, la carte à microcircuit peut également inclure des moyens d'émission d'une information indicative d'un modèle de l'entité électronique et des moyens de réception d'une donnée représentative de l'orientation relative de l'entité électronique et de la carte à microcircuit pour ledit modèle. La carte à microcircuit peut alors commander la production (ou restitution) du signal indicatif en tenant compte de cette orientation relative.

On propose également une entité électronique équipée d'une telle carte à microcircuit.

D'autres caractéristiques et avantages de l'invention apparaîtront à la lumière de la description qui suit, faite en référence aux dessins annexés dans lesquels :
- la figure 1 représente un système dans lequel intervient un téléphone portable équipé d'une carte à microcircuit conforme aux enseignements de l'invention ;
- la figure 2 représente de manière schématique cette carte à microcircuit ;
- la figure 3 représente une possibilité envisagée pour déterminer l'orientation relative de la carte à microcircuit et du téléphone portable.

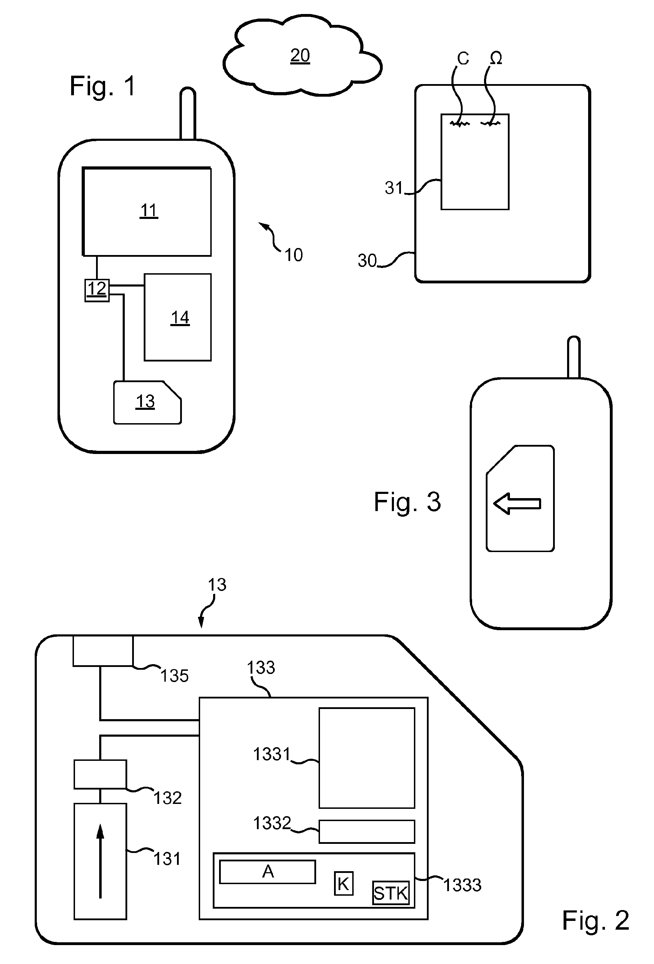

Le téléphone portable de la figure 1 comprend un microprocesseur 12 apte notamment à afficher des messages à destination de l'utilisateur sur un écran 11 et à recevoir des instructions de l'utilisateur à travers un clavier 14.

Le téléphone portable 10 reçoit, par exemple de manière amovible dans un logement prévu à cet effet, une carte à microcircuit 13 connectée au microprocesseur 12 à travers des contacts de la carte à microcircuit 13 pour interagir avec celui-ci.

La carte à microcircuit 13 est une carte d'identification à un réseau de téléphonie mobile 20 (par exemple une carte à microcircuit SIM pour *"Subscriber Identity Module"* ou USIM pour *"Universal Subscriber Identity Module"*) qui permet d'identifier l'utilisateur du téléphone portable 10 (en général abonné au réseau de téléphonie mobile 20) et ainsi d'être autorisé par le réseau de téléphonie mobile 20 à échanger (grâce notamment à des moyens de communication équipant le téléphone portable 10 non représentés) des données à travers le réseau de téléphonie mobile 20 (ces données pouvant représenter des signaux vocaux lorsque le téléphone mobile 10 est utilisé pour dialoguer avec un utilisateur distant, ou constituer d'autres types de données, tel qu'un message, un fichier image ou des données utiles au fonctionnement du téléphone portable 10 comme décrit ci-après).

Le réseau de téléphonie mobile 20 est un réseau de type cellulaire dans lequel la zone couverte par le réseau est divisée en cellules : une antenne-relais du réseau de téléphonie mobile 20 est associée à chaque cellule de telle sorte que le téléphone portable 10 a accès au réseau de téléphonie mobile 20 à travers l'antenne-relais associée à la cellule dans laquelle le téléphone portable 10 se situe.

Le téléphone portable 10 peut notamment échanger des données avec un serveur distant 30 qui mémorise dans un fichier 31, pour chaque cellule C du réseau de téléphonie mobile 20, l'angle formé entre la direction du nord (ici magnétique) et la direction du point d'intérêt considéré (par exemple La Mecque) lorsque l'on se situe dans la cellule C.

Le serveur 30 peut stocker des données telles que celles du fichier 31 pour une pluralité de points d'intérêt mais on se limitera dans la présente description au cas d'un point d'intérêt par souci de simplification.

La figure 2 est une représentation schématique des éléments de la carte à microcircuit 13.

La carte à microcircuit 13 comprend un processeur 133 qui incorpore notamment une mémoire morte 1331 (où sont par exemple mémorisées des instructions dont l'exécution par le processeur 133 permet notamment le fonctionnement de base de la carte à microcircuit), une mémoire vive 1332 (où sont mémorisées temporairement des données utilisées dans le fonctionnement de la carte à microcircuit 13) et une mémoire non volatile réinscriptible 1333.

La mémoire non volatile réinscriptible 1333 mémorise notamment une clé cryptographique K permettant l'identification de l'utilisateur auprès du réseau de téléphonie mobile 20 comme déjà mentionné, un menu STK (pour *"SIM TOOLKIT'*) qui est une application dont l'exécution permet au processeur 133 de commander au microprocesseur 12 du téléphone portable 10 l'affichage sur son écran 11 d'un menu présentant les fonctionnalités permises par la carte à microcircuit 13, et une application A de localisation du point d'intérêt dont l'exécution permet la mise en oeuvre du procédé décrit dans la suite.

Comme déjà mentionné, la carte à microcircuit 13 présente des contacts 135 au travers desquels le processeur 133 de la carte à microcircuit 13 peut dialoguer et interagir avec le microprocesseur 12 du téléphone portable 10.

La carte à microcircuit 13 comprend également un magnétomètre 131, réalisé par exemple selon une technologie MEMS (pour *"Micro Electro Mechanical System*") ou NEMS (pour *"Nano Electro Mechanical System*"), ayant typiquement une épaisseur comprise entre 400 µm et 500 µm, et un contrôleur 132 (par exemple un circuit intégré spécialisé ou ASIC) qui reçoit les signaux émis par le magnétomètre 131 et émet en conséquence des données à destination du processeur 133, par exemple des données représentatives de l'orientation du magnétomètre 131 (en général une direction privilégiée de celui-ci tel que représenté par une flèche en figure 2) par rapport au nord magnétique.

Lorsque l'utilisateur souhaite connaître la direction d'un point d'intérêt à l'endroit où il se situe, il accède au menu STK de la carte à microcircuit 13 (ce que permet par convention tout téléphone portable équipé d'une telle carte) et sélectionne l'application A dans ce menu STK, ce qui provoque l'exécution de l'application A et ainsi le procédé décrit à présent.

De manière optionnelle, l'application A (c'est-à-dire le processeur 133 sous l'effet de l'exécution de l'application A) peut demander à l'utilisateur (au moyen d'un affichage sur l'écran 11 et en attendant un retour de l'utilisateur sur le clavier 14) quel point d'intérêt l'utilisateur souhaite pouvoir localiser. Comme déjà indiqué, on s'intéresse dans la suite à un seul point d'intérêt que l'utilisateur a par exemple choisi dans cette étape.

Le processeur 133 (toujours du fait de l'exécution de l'application A) obtient la référence de la cellule C dans laquelle le téléphone portable 10 est situé, par exemple en lisant le fichier EF LOCI dans la mémoire non volatile réinscriptible 1333 de la carte à microcircuit 13 ou en émettant une commande STK, par exemple PROVIDE LOCAL INFO, à destination du microprocesseur 12 du téléphone portable 10 qui doit alors retourner au processeur 133 l'information relative à la référence de la cellule C.

Le processeur 133 émet alors la référence C de la cellule (qui constitue une information représentative du lieu courant du téléphone portable à destination du serveur 30 (via le microprocesseur 12 et le réseau de téléphonie mobile 20) par exemple sous forme d'une demande visant à obtenir l'angle Q associé à cette cellule C comme décrit à présent.

A réception de cette demande, le serveur distant 30 recherche la cellule C dans le fichier 31, lie l'angle Q associé à cette cellule C et renvoie la donnée Q lue à destination du processeur 133 de la carte à microcircuit 13 via le réseau de téléphonie mobile 20 et le microprocesseur 12 du téléphone portable 10. On rappelle que l'angle Q est l'orientation du point d'intérêt par rapport au nord magnétique à l'endroit de la cellule C concernée.

Le processeur 133 commande alors au microprocesseur 12 l'affichage sur l'écran 11 d'un message à destination de l'utilisateur qui demande à celui-ci de disposer le téléphone portable 10 dans une position déterminée (par exemple "à *plat*") qui permette au magnétomètre 131 de mesurer dans de bonnes conditions son orientation par rapport au nord magnétique, typiquement de telle sorte que le plan d'extension de la carte à microcircuit 13 se situe (au moins approximativement) à l'horizontal.

Le processeur 133 détermine alors en interagissant avec le contrôleur 132 l'angle formé à cet instant entre la carte à microcircuit 13 (et par déduction comme expliqué ci-après du téléphone portable 10) et le nord magnétique, soit en lisant des données périodiquement reçues du contrôleur 132, soit en émettant à destination du contrôleur 132 une requête pour recevoir de telles données.

Sur la base de l'angle mesuré représentant l'orientation du téléphone portable 10 et de l'angle Q représentant la direction du point d'intérêt, le processeur 133 commande au microprocesseur 12 de générer à destination de l'utilisateur une indication représentative de la différence entre ces angles (autrement dit de l'orientation relative du téléphone portable 10 par rapport au point d'intérêt). Cette indication est par exemple une ou plusieurs des indications suivantes :
- l'affichage numérique de la valeur de la différence ;
- le sens de rotation du téléphone portable 10 nécessaire pour se rapprocher d'un alignement de celui-ci avec le point d'intérêt (c'est-à-dire d'une différence nulle) par exemple une flèche suggérant une rotation dans le sens des aiguilles d'une montre ou dans le sens inverse ;
- une indication (par exemple l'affichage d'un signe ou l'émission d'un son ou la vibration du téléphone) que le téléphone portable 10 est aligné avec le point d'intérêt ;
- l'affichage sur l'écran 11 d'une flèche pointant vers le point d'intérêt.

Les étapes de réception par le processeur 133 de l'orientation mesurée par le magnétomètre 131 et de génération d'une indication sur cette base sont répétées périodiquement avec une période relativement faible (par exemple comprise entre 0,1 s et 0,5 s) de sorte que l'indication est mise à jour continuellement en tenant compte des mouvements éventuels du téléphone portable 10, ce qui permet par exemple à l'utilisateur de faire varier l'orientation du téléphone portable 10 jusqu'à ce que sa direction principale soit alignée avec le point d'intérêt (ce qui est intéressant en particulier lorsque l'indication est une indication visuelle, sonore ou vibratoire d'alignement).

On peut prévoir par ailleurs que l'utilisateur puisse mettre fin à l'exécution de l'application A en appuyant sur une touche du clavier 14 du téléphone portable 10 (ce qu'un affichage adéquat sur l'écran 11 peut également suggérer à l'utilisateur).

On remarque que la possibilité de déterminer l'orientation du téléphone portable à l'aide du magnétomètre 131 situé dans la carte à microcircuit 13 suppose définie au préalable l'orientation entre le téléphone portable 10 et la carte à microcircuit 13.

Pour ce faire, on peut par exemple conserver dans la mémoire non volatile réinscriptible 1333 une donnée représentative de l'orientation relative du téléphone portable 10 et de la carte à microcircuit 13.

Cette donnée représentative de l'orientation relative est par exemple déterminée lors de la première utilisation de la carte à microcircuit 133 ou du premier lancement de l'application A.

On peut prévoir à cette occasion que la carte à microcircuit 13 (par exemple sous le contrôle de l'application A lors de sa première utilisation) demande à l'utilisateur (par un affichage adéquat sur l'écran 11, par exemple au moyen d'une commande STK) d'orienter son téléphone portable 10 (par exemple une partie précise de celui-ci) vers le nord magnétique (déterminé par exemple à l'aide d'une boussole) et d'enfoncer une touche du clavier 14.

Ainsi, lorsque l'utilisateur enfonce la touche, l'orientation mesurée par le magnétomètre 131 est transmise au processeur 133 et mémorisée comme donnée d'orientation relative (ou donnée de référence) dans la mémoire non volatile réinscriptible 1333 en tant qu'angle émis par le contrôleur 132 et désignant le nord magnétique.

On peut alors déduire simplement (au cours de l'opération de localisation du point d'intérêt décrite ci-dessus) l'orientation du téléphone portable 10 de l'orientation du magnétomètre 131 par simple soustraction utilisant cette donnée de référence.

En variante, la donnée représentative de l'orientation relative peut être déterminée comme suit : la carte à microcircuit 13 obtient du téléphone portable 10 une information indiquant le modèle du téléphone portable 10, envoie cette information à un serveur dédié (par exemple le serveur 30 susmentionné et éventuellement à travers le réseau de téléphonie mobile 20) où est mémorisée, pour chaque modèle de téléphone, la donnée représentative de l'orientation relative associée à ce modèle ; le serveur dédié envoie alors en retour la donnée représentative de l'orientation relative associée au modèle du téléphone portable 10 à la carte à microcircuit 13 qui mémorise cette donnée.

Selon une autre variante envisageable, dans laquelle on n'utilise pas cette fois une telle donnée représentative de l'orientation relative, on peut prévoir qu'une orientation de référence soit indiquée à l'utilisateur, par exemple par la présence d'une flèche imprimée sur une face de la carte à microcircuit comme représenté en figure 3 ; l'indication d'orientation fournie à l'utilisateur sous la commande de l'application A est alors une indication d'orientation relativement à cette orientation de référence. Par exemple, l'indication par l'émission d'un signal (sonore ou vibratoire) de l'alignement avec le point d'intérêt signifie alors que le point d'intérêt est aligné avec la direction de référence représentée par la flèche imprimée sur la carte à microcircuit.

Les modes de réalisation qui précèdent ne sont que des exemples possibles de mise en oeuvre de l'invention, qui ne s'y limite pas.

On peut prévoir notamment que le fichier 31 soit mémorisé au sein de la carte à microcircuit 13 (par exemple dans la mémoire non volatile réinscriptible 1333) et non dans un serveur distant 30.

De même, la localisation courante du téléphone portable 10 peut être obtenue par d'autres moyens que la référence à la cellule C dans laquelle il se situe, par exemple par l'obtention de coordonnées GPS à l'aide d'un récepteur GPS.

Dans tous les cas, on peut déterminer l'orientation du point d'intérêt par rapport au nord au lieu actuel sans consultation d'une table de correspondance tel que le fichier 31, par exemple par calcul en connaissant les coordonnées (par GPS ou grâce à la cellule C actuelle) du téléphone portable 10 et les coordonnées du point d'intérêt.

## Revendications

1. Carte à microcircuit (13) destinée à équiper une entité électronique (10) **caractérisée en ce qu'**elle comprend :
- des moyens (131, 132, 133) de détermination de l'orientation de la carte à microcircuit (13) par rapport à une direction définie par un point d'intérêt ;
- des moyens (133, 135) aptes à commander l'entité électronique (10) de telle sorte qu'elle génère un signal indicatif fonction de ladite orientation.

2. Carte à microcircuit selon la revendication 1, **caractérisée en ce que** les moyens de détermination comprennent des moyens (133) d'obtention d'une information de localisation de la carte à microcircuit.

3. Carte à microcircuit selon la revendication 2, **caractérisée en ce que** les moyens d'obtention sont aptes à obtenir une information de localisation d'une cellule à travers laquelle l'entité électronique communique dans un réseau de téléphonie mobile.

4. Carte à microcircuit selon la revendication 2 ou 3, **caractérisée par** des moyens de consultation d'une table de correspondance (31) associant à l'information de localisation une direction du point d'intérêt par rapport à une direction de référence.

5. Carte à microcircuit selon la revendication 4, **caractérisée en ce que** la table de correspondance (31) est mémorisée au sein d'un serveur distant (30) accessible par l'entité électronique (10).

6. Carte à microcircuit selon l'une des revendications 1 à 5, **caractérisée en ce que** les moyens de détermination comprennent un magnétomètre (131).

7. Carte à microcircuit selon l'une des revendications 1 à 6, **caractérisée en ce que** la carte à microcircuit (13) est une carte d'identification à un réseau de téléphonie mobile.

8. Carte à microcircuit selon l'une des revendications 1 à 7, **caractérisée en ce que** lesdits moyens aptes à commander l'entité électronique sont aptes à émettre une commande de génération dudit signal indicatif à destination d'un microprocesseur (12) de l'entité électronique (10).

9. Carte à microcircuit selon l'une des revendications 1 à 8, **caractérisée par** des moyens aptes à commander l'affichage sur un écran (11) de l'entité électronique (10) d'un message de disposition de l'entité électronique (10) dans une position déterminée.

10. Carte à microcircuit selon l'une des revendications 1 à 9, **caractérisée en ce qu'**elle comprend une face présentant une indication visuelle d'une direction de référence associée aux moyens de détermination.

11. Carte à microcircuit selon l'une des revendications 1 à 10, **caractérisée par** des moyens d'émission d'une information indicative d'un modèle de l'entité électronique et par des moyens de réception d'une donnée représentative de l'orientation relative de l'entité électronique et de la carte à microcircuit pour ledit modèle.

12. Entité électronique (10) **caractérisée en ce qu'**elle est équipée d'une carte à microcircuit (13) selon l'une des revendications 1 à 11.
